## Europäisches Patentamt

(19) European Patent Office

Office européen des brevets

(11) Veröffentlichungsnummer : **0 310 786 B1**

(12) **EUROPÄISCHE PATENTSCHRIFT**

(45) Veröffentlichungstag der Patentschrift :
**19.06.91 Patentblatt 91/25**

(21) Anmeldenummer : **88113115.5**

(22) Anmeldetag : **12.08.88**

(51) Int. Cl.⁵ : **B60R 22/38**

(30) Priorität : **09.10.87 DE 3734209**

(43) Veröffentlichungstag der Anmeldung :
**12.04.89 Patentblatt 89/15**

(45) Bekanntmachung des Hinweises auf die
Patenterteilung :
**19.06.91 Patentblatt 91/25**

(84) Benannte Vertragsstaaten :
**DE ES FR GB IT SE**

(56) Entgegenhaltungen :
**EP-A- 0 273 584**
**FR-A- 1 334 770**
**GB-A- 2 113 979**
**GB-A- 2 155 306**
**US-A- 3 064 920**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Märtz, Josef
Uhlandstrasse 2
W-8057 Eching (DE)**
Erfinder : **Hochmuth, Karl-Heinz
Ostpreussenstrasse 10
W-8057 Eching (DE)**

(54) Aufrollautomat eines Fahrzeug-Sicherheitsgurtes.

## Beschreibung

Die Erfindung bezieht sich auf einen Aufrollautomaten eines Fahrzeugsicherheitsgurtes, wie er im Oberbegriff des Hauptanspruchs beschrieben ist.

Derartige Aufrollautomaten sind bekannt. So zeigt beispielsweise die DE-OS 34 02 422 ein Rahmengehäuse für den Aufrollautomaten, das am Fahrzeugaufbau befestigt wird. In dem Rahmen ist eine Aufwickelwelle drehbar gehalten, die an ihrer einen Stirnseite zwei, radial nach außen bewegbare Verriegelungsplatten trägt. Die Verriegelungsplatten greifen mit Stiften in eine Trägheitsmasse, die wiederum verdrehbar gegen die Kraft einer Feder auf der Aufwickelwelle sitzt. Bei einem normalen Abspulen des Gurtbandes dreht die Trägheitsmasse im Gleichklang mit der Aufwickelwelle. In einem Blockierungsfall, also wenn der Körper des Fahrzeugsinsassen rasch nach vorne bewegt wird, bewirkt die Trägheitsmasse ein radiales Auswandern der Sperrplatten, die dann in eine rahmenfeste Verzahnung eingreifen und dadurch die Aufwickelwelle blockieren.

Bei Aufrollautomaten der genannten Art kommt es immer wieder vor, daß das Gurtband nach einem Aufwickelvorgang blockiert ist und nicht mehr herausgezogen werden kann.

Untersuchungen haben zu der Erkenntnis geführt, daß hierfür hauptsächlich die Trägheitsmasse verantwortlich ist. Denn am Ende eines Aufwickelvorgangs, der bekanntlich durch eine im Aufrollautomaten vorgesehene Rückrollfeder vorgenommen wird, stoppt die Aufwickelwelle abrupt. Die Trägheitsmasse läuft aber noch aufgrund ihrer verdrehbaren Anordnung etwas nach und bewirkt damit ein Eingreifen der Sperrplatten in die gehäusefeste Verzahnung. Im ungünstigen Fall werden durch die Kraft der Rückhohlfeder die Sperrplatten in der Sperrverzahnung verspannt und können nicht mehr zurückfahren. Das Gurtband ist damit blockiert und ein Ausziehen ist in der Regel erst wieder nach mehrmaligem Ziehen am Band möglich.

Die US-A-3 064 920 hat dieses Problem erkannt. Sie sieht vor, die Trägheitsmasse beim Aufwickeln des Gurtbandes gegenüber der Aufwickelwelle in ihrer Verdrehbarkeit zu sperren. Erreicht wird dies dadurch, daß zwischen einem Verriegelungshebel und einer Gehäusewand ein Reibschluß stattfindet. Er bewirkt, daß der Verriegelungshebel in eine Stellung gedreht wird, in der er die Verdrehbarkeit der Trägheitsmasse gegenüber der Aufwickelwelle blockiert. Nachdem der Sperriegel sich in dieser Stellung befindet, ist sein Verbleiben dort und das Blockieren der Trägheitsmasse nicht mehr vom Reibschluß abhängig.

Die Erfindung hat sich zur Aufgabe gestellt, für das Blockieren der Trägheitsmasse gegenüber der Aufwickelwelle einen anderen Weg zu beschreiten. Sie sieht vor, während des Aufwickelns des Gurtbandes die Trägheitsmasse durch Reibschluß in ihrer Verdrehbarkeit zu sperren.

Auf diese Weise ist ebenfalls ein Weiterdrehen der Trägheitsmasse am Ende des Aufwickelvorganges ausgeschlossen. Damit werden aber auch nicht mehr die Sperrplatten oder in ähnlichen Ausführungen der Sperriegel in die Sperrverzahnung gedrängt, so daß ein Blockieren des Gurtbandes nicht auftreten kann.

Unter Sperren der Trägheitsmasse kann auch ein starkes Dämpfen verstanden werden. Es muß jedoch sichergestellt sein, daß bei einem normalen Aufwickelvorgang der Sperrmechanismus durch die Trägheitsmasse nicht ausgelöst werden kann.

In einer Ausgestaltung der Erfindung ist die Sperrmasse so auf der Aufwickelwelle angeordnet, daß sie sich wenigstens beim Aufwickelvorgang im Reibschluß mit dieser befindet. Dies kann konstruktiv auf jede denkbare Weise ausgeführt sein.

Außerdem sei daraufhingewiesen, daß die Trägheitsmasse nicht unbedingt direkt auf der Aufwickelwelle gelagert sein muß. Es können zwischen ihr und der Aufwickelwelle auch weitere Bauteile vorgesehen sein, die beispielsweise ein Blockieren der Aufwickelwelle bei einem übermäßigen Verzögern des Fahrzeuges herbeiführen. Es muß erfindungsgemäß nur sichergestellt sein, daß sich die Trägheitsmasse beim Aufwickeln des Gurtbandes nicht gegenüber der Aufwickelwelle in Aufwickelrichtung verdrehen kann bzw. in dieser Verdrehbarkeit soweit gedämpft ist, daß sie den Sperrmechanismus nicht auslöst.

In einem vorteilhaften Ausführungsbeispiel sieht das Gehäuse des Aufrollautomaten einen beispielsweise als Zapfen ausgebildeten Abschnitt vor, dessen Achse mit der der Aufwickelwelle zusammenfällt. Auf diesen Abschnitt ist ein Federring aufgespannt und zwar so, daß er sich durch Überwindung des Reibschlusses verdrehen läßt. Dieser Federring weist desweiteren einen Schenkel auf, der sich beim Aufwickeln des Gurtbandes an die Trägheitsmasse legt und diese damit in ihrer Verdrehbarkeit sperrt. Dabei kann er sich direkt an die Trägheitsmasse anlegen oder über weitere Bauteile auf sie wirken. Allerdings ist bei jeder Ausführung darauf zu achten, daß die Trägheitsmasse bei Abwickeln des Gurtbandes freigegeben ist, um gegebenenfalls ein Blockieren des Gurtbandes herbeiführen zu können.

In einer zweckmäßigen Ausbildung steuert die Trägheitsmasse eine an der Aufwickelwelle vorgesehene Sperrklinke an, die ihrerseits im Blockierungsfall in eine gehäusefeste Sperrverzahnung eingreift. Der Schenkel des Federringes kann in diesem Fall auf die Sperrklinke drücken, die wiederum die Trägheitsmasse beim Aufwickeln in ihrer Verdrehbarkeit sperrt. Beim Abwickeln des Gurtbandes verdreht sich der Federring um einen Winkel und stößt dann an einen Anschlag an, der wiederum mit der Aufwickelwelle fest verbunden ist. In dieser Stellung gibt der Federring die Sperrklinke und damit die Trägheitsmasse frei, so daß bei einem Unfall der Sicherheitsgurt sicher gesperrt wird.

Weitere Ausgestaltungen der Erfindung ergeben sich aus der nachfolgenden Beschreibung eines Ausführungsbeispiels und der dazugehörigen Zeichnung. Es zeigen :

Fig. 1 in perspektivischer Darstellung die für das Verständnis der Erfindung wichtigen Teile des Sperrmechanismus eines Aufrollautomaten entlang der Schnittebene I-I nach Figur 3,

Fig. 2 in vergrößertem Maßstab die Vorderansicht nach Figur 1 und

Fig. 3 eine Schnittdarstellung entlang dem Schnitt III-III nach Figur 2.

In der Zeichnung ist der Teil eines Aufrollautomaten für ein Fahrzeug-Sicherheitsgurt dargestellt, der das Gurtband blockiert, wenn es übermäßig beschleunigt abgezogen wird. Auf die Darstellung der übrigen Teile des Aufrollautomaten wurde verzichtet, da sie allgemein bekannt und zum Verständnis der Erfindung nicht erforderlich sind.

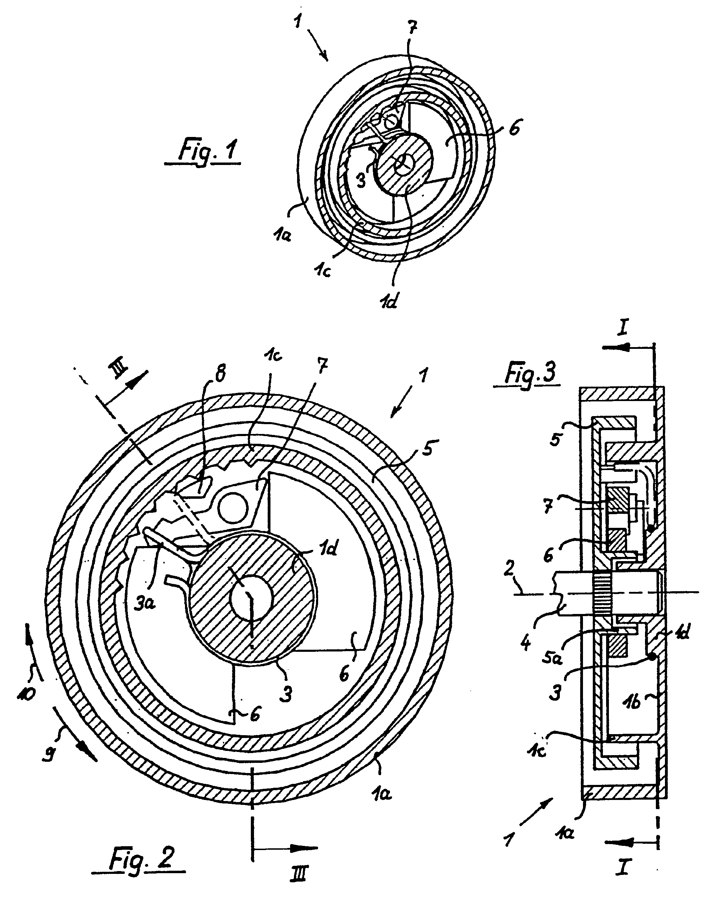

Der hier dargestellte Teil des Aufrollautomaten besteht aus einem Gehäusekörper 1, der im eingebauten Zustand an einem fahrzeugfesten Teil beispielsweise angeschraubt ist. Der Gehäusekörper 1 weist, wie vor allem Figur 3 zeigt, eine Topfform auf mit einem Topfrand 1a und einem Topfboden 1b. Konzentrisch und mit Abstand zum Topfrand 1a ist am Gehäusekörper 1 radial einwärts zunächst einen Kreisring 1c einstückig am Topfboden 1b ausgeformt. Die Innenwandung des Kreisringes 1c ist als Sperrverzahnung ausgeführt, wie dies die Figuren 1 und 3 auf einem Teilabschnitt zeigen. Die Sperrverzahnung erstreckt sich in Wirklichkeit über den gesamten Umfang.

Radial noch näher zu einer Achse 2 hin steht vom Boden 1b des Gehäusekörpers 1 ein abgestufter Zapfen 1d nach innen axial vor. Auf der ersten, radial äußeren Stufe des Zapfens 1d sitzt ein Federring 3. Die achsnähere zweite Stufe des Zapfens 1d weist eine Durchgangsbohrung für die Aufnahme einer Aufwickelwelle 4 für das nicht näher dargestellte Gurtband auf. Die Aufwickelwelle 4 ist im Gehäusekörper 1 frei drehbar gelagert.

Ein ebenfalls topfförmig ausgebildetes Sperrad 5 befindet sich innerhalb des Gehäusekörpers 1 und ist zu diesem koaxial ausgerichtet. Dabei sitzt das Sperrad 5 verdrehfest auf der Aufwickelwelle 4. Die Abmessungen des Sperrades 5 sind so gewählt, daß seine äußere Ringwand eine Lage zwischen dem Topfrand 1a und dem Kreisring 1c einnimmt ohne diese zu berühren. Desweiteren weist das Sperrad 5 einen achsnahen konzentrisch angeordneten Zapfen 5a auf, auf dem begrenzt verdrehbar eine Trägheitsmasse 6 gelagert ist. Der Gehäusekörper 1 und das Sperrad 5 sind so in ihrer Topfform zueinander angeordnet und ineinander geschoben.

Die Trägheitsmasse 6 weist zwei sich radial nach außen erstreckende Flügelsegmente auf. In einem zwischen den Flügelsegmenten freibleibenden Raum ist eine Sperrklinke 7 vorgesehen, die drehbar um eine achsparallele Schwenkachse an der Innenseite des Sperrades gelagert ist. In Umfangsrichtung versetzt weist das Sperrad einen fest mit ihm verbundenen Anschlag 8 auf.

Ein Schenkel 3a des Federringes 3 drückt entweder auf die Sperrklinke 7, die wiederum auf die Trägheitsmasse 6 wirkt, oder er stützt sich an dem Anschlag 8 ab. Der Federring 3 selbst ist auf dem Zapfen 1d unter Vorspannung aufgezogen. Er läßt sich auf diesem Zapfen zwar verdrehen, jedoch muß hierfür eine gewisse Reibungskraft überwunden werden.

Die Wirkungsweise der Anordnung ergibt sich aus den beiden unterschiedlichen Drehrichtungen der Aufwickelwelle 4. Wird das Gurtband abgezogen – also abgewickelt von der Aufwickelwelle 4 – dreht sich die Aufwickelwelle 4 in Richtung des Pfeiles 9 (Figur 2). Mit ihr dreht sich auch das Sperrad 5 und der Anschlag 8 stößt nach einem kurzen Verdrehweg auf den Federschenkel 3a. Diese Stellung ist in Figur 2 gestrichelt dargestellt. Der Federschenkel 3a gibt demnach die Sperrklinke 7 frei. Solange das Abwickeln des Gurtbandes in der üblichen Geschwindigkeit verläuft, nimmt das Sperrad 5 auch die Trägheitsmasse 7 mit. Erfolgt nun ein plötzliches Beschleunigen der Abwickelgeschwindigkeit, wie dies bei einem Unfall auftritt, verbleibt die Trägheitsmasse aufgrund ihrer Trägheit zunächst in ihrer ursprünglichen Drehgeschwindigkeit. Da aber die Aufwickelwelle 4 mit dem Sperrad 5 schneller dreht, drückt die Trägheitsmasse 6 die Sperrklinke 7 radial nach außen bis sie in die Sperrverzahnung des Kreisringes 1c eingreift und dann das Sperrad 5 und die Aufwickelwelle 4 blockiert.

Bei einem Aufwickeln des Gurtbandes, dargestellt in Figur 2 durch den Pfeil 10, stößt der Schenkel 3a des Federringes 3 gegen die Sperrklinke und druckt sie gegen die Trägheitsmasse. Diese wiederum stützt sich aufgrund ihrer begrenzten Verdrehbarkeit auf der Welle 4 an einem entsprechenden nicht dargestellten Anschlag ab. Während des gesamten Aufwickelns hält somit der Federring 3 die Sperrklinke zurück. Beim abrupten Stoppen der Aufwickelwelle 4 am Ende des Aufwickelvorganges kann die Trägheitsmasse 6 nicht nachlaufen und den Sperriegel 7 in die Sperrverzahnung drängen. Ein Blockieren des Gurtbandes tritt nicht auf.

## Ansprüche

1. Aufrollautomat eines Fahrzeug-Sicherheitsgurtes, mit einer in einem Gehäuse (1) drehbar gehaltenen Aufwickelwelle (4) für das Gurtband und einer Trägheitsmasse (6), die gegenüber der Aufwickelwelle (4) verdrehbar gelagert ist und einen Verriegelungsmechanismus zwischen Aufwickelwelle (4) und Gehäuse (1) ansteuert, wobei die Trägheitsmasse (6) beim Aufwickeln des Gurtbandes gegenüber der Aufwickelwelle (4) in ihrer Verdrehbarkeit gesperrt ist, dadurch gekennzeichnet, daß die Trägheitsmasse (6) durch Reibschluß in ihrer Verdrehbarkeit gesperrt ist.

2. Aufrollautomat nach Anspruch 1, dadurch gekennzeichnet, daß auf einem gehäusefesten Abschnitt (Zapfen 1d) ein Federring (3) unter Reibschluß verdrehbar aufgespannt ist, der mit einem Schenkel (3a) beim Aufwickeln des Gurtbandes die Trägheitsmasse (6) gegenüber der Aufwickelwelle (4) festlegt.

3. Aufrollautomat nach Anspruch 2, bei dem eine mit der Aufwickelwelle (4) verbundene und auf die Trägheitsmasse (6) wirkende Sperrklinke (7) vorhanden ist, dadurch gekennzeichnet, daß der Schenkel (3a) des Federringes (3) beim Aufwickeln des Gurtbandes gegen die Sperrklinke (7) anliegt und diese dadurch die Trägheitsmasse (6) festlegt und daß der Schenkel (3a) beim Abwickeln des Gurtbandes die Trägheitsmasse (6) freigibt.

4. Aufrollautomat nach Anspruch 3, dadurch gekennzeichnet, daß sich der Schenkel (3a) beim Abwickeln des Gurtbandes an einem mit der Aufrollwickelwelle (4) verbundenen Anschlag (8) abstützt.

## Claims

1. An automatic retractor of a vehicle safety belt, having a wind-up shaft (4) rotatably held in a housing (1) for the belt strap and an inertia mass (6) which is rotatably mounted in relation to the wind-up shaft (4) and actuates a locking mechanism between wind-up shaft (4) and housing (1), while the inertia mass (6) is blocked in its rotatability in relation to the wind-up shaft (4) by the winding-up of the belt strap, characterised in that the inertia mass (6) is blocked in its rotatability by frictional engagement.

2. An automatic retractor according to Claim 1, characterised in that a spring ring (3) is clamped rotatably on a section (journal 1d) fast with the housing, which ring makes the inertia mass (6) fast in relation to the wind-up shaft (4) with a leg (3a) on the winding-up of the belt strap.

3. An automatic retractor according to Claim 2, in which a locking pawl (7) is present which is connected with the wind-up shaft (4) and acts upon the inertia mass (6), characterised in that the leg (3a) of the spring ring (3) rests against the locking pawl (7) in the winding-up of the belt strap and thus the pawl makes the inertia mass (6) fast, and in that the leg (3a) releases the inertia mass (6) in the unwinding of the belt strap.

4. An automatic retractor according to Claim 3, characterised in that the leg (3a) supports itself on a stop (8) connected with the wind-up shaft (4) in the unwinding of the belt strap.

## Revendications

1. Enrouleur de ceinture de sécurité de véhicule comportant un axe d'enrouleur (4) monté à rotation dans un boîtier (1) pour la ceinture ainsi qu'une masse d'inertie (6) qui peut tourner par rapport à l'axe (4) et bloquer un mécanisme de verrouillage entre l'axe (4) et le boîtier (1), la masse d'inertie (6) lors de l'enroulement de la ceinture étant bloquée en rotation par rapport à l'axe d'enroulement (4), enrouleur caractérisé en ce que la masse d'inertie (6) est bloquée en rotation par la force de frottement.

2. Enrouleur de ceinture de sécurité selon la revendication 1, caractérisé par une bague élastique (3) montée sur un segment solidaire du boîtier (téton 1d) tout en pouvant tourner avec frottement, cette bague fixant par une branche (3a), lors de l'enroulement de la ceinture, la masse d'inertie (6) par rapport à l'axe d'enroulement (4).

3. Enrouleur de ceinture de sécurité selon la revendication 2 comportant un cliquet (7) relié à l'axe d'enroulement (4) et coopérant avec la masse d'inertie (6), enrouleur caractérisé en ce que la branche (3a) de la bague élastique (3) s'applique contre le cliquet (7) lors de l'enroulement de la ceinture et fixe ainsi la masse d'inertie (6) et en ce que la branche (3a) libère la masse d'inertie (6) lors du déroulement de la ceinture de sécurité.

4. Enrouleur de ceinture de sécurité selon la revendication 3, caractérisé en ce que la branche (3a) s'appuie contre une butée (8) reliée à l'axe d'enrouleur (4) lors du déroulement de la ceinture.

EP 0 310 786 B1

_Fig. 1_

_Fig. 3_

_Fig. 2_

5